Europäisches Patentamt

European Patent Office

Office européen des brevets

(11) Publication number : **0 503 801 A2**

# (12) EUROPEAN PATENT APPLICATION

(21) Application number : **92301686.9**

(22) Date of filing : **05.03.92**

(51) Int. Cl.$^5$ : **B64D 31/04, B64C 13/04**

(30) Priority : **08.03.91 GB 9104996**

(43) Date of publication of application :
**16.09.92 Bulletin 92/38**

(84) Designated Contracting States :
**DE ES FR GB IT SE**

(71) Applicant : **BRITISH AEROSPACE PUBLIC
LIMITED COMPANY
11 Strand
London WC2N 5JT (GB)**

(72) Inventor : **Arrow, Susanna Rosemary, British
Aerospace
Military Aircraft Limited, Warton Aerodrome
Preston, Lancashire PR4 1AX (GB)**

(74) Representative : **Eastmond, John et al
British Aerospace plc, Corporate Intellectual
Property Department, Park East, PO Box 87,
Farnborough Aerospace Centre
Farnborough, Hants GU14 6YU (GB)**

(54) **Hand-operated controller.**

(57) A hand control having particular application
as an aircraft throttle box ; the control requiring
merely small movements of the wrist and hand,
thereby being especially effective when used
under high 'g' conditions. The control includes
a support (3) for the forearm and a handle (4)
capable of linear and angular movement for
control of an engine from "idle" through
"reheat" to "combat" mode. The handle (4) is
provided with finger-operated controls (8) for
controlling trim or weapons, for example, and a
miniature joystick for driving an X-Y controller
on a cockpit display.

Fig. 4.

EP 0 503 801 A2

This invention relates to hand operated controllers and is particularly, though not exclusively, useful for controlling an aircraft engine throttle. Controllers of this type are commonly known as "throttle boxes".

Known throttle boxes (such as that described in GB-A-2073887) comprise a control member linearly moveable on a shaft to generate a control output signal to control the engine throttle opening. This movement may be effected either manually by a pilot or automatically when the aircraft is under the control of an autopilot.

When the throttle box is under manual control, the pilot is required to move his arm, back and forth, in order to actuate the throttle. This is a problem when the aircraft (and pilot) are experiencing high 'g' forces, as the pilot finds it difficult to adequately control his arm movements under such conditions.

It is an object of this invention to provide a minimum displacement throttle control which is easy to operate by a pilot under high 'g' conditions and whilst his forearm is fully supported.

The above object is achieved by an arrangement which requires small movements of the wrist and hand only.

According to the present invention there is provided a hand-operated control assembly characterised in that the control assembly includes:

a support for an operator's forearm;

a fixed housing located adjacent to said support;

a moveable member, supported within the housing, for rotational movement with respect to the housing and having a handle extending from the housing; and

sensor means for sensing the rotational position of the handle with respect to the housing.

Conveniently, said moveable member is manually moveable and resiliently biased towards a predetermined orientation.

Optionally, said moveable member is supported within the housing for linear movement with respect to said housing, and said control assembly further includes further sensor means for sensing the linear position of the handle with respect to the housing.

The operator may manipulate the handle by pivoting his hand about the wrist. The palm may be moved downwards with respect to the fixed housing, linearly, or it can rotate, thus bringing about rotational movement of the handle.

The invention has the advantage that when used as a throttle box, the pilot will not operate it inadvertently under high 'g' conditions, by hanging on to it.

Furthermore, the operation of the handle can be effected without any movement of the forearm.

The handle may be resiliently biased towards the operator's hand by means of a spring. Preferably, the force exerted by the spring is sufficient to hold the handle against the operator's palm, when his hand is tilted back, so that his fingers and thumb can be used to perform other functions. Such other functions could involve the operation of push-buttons or a joystick which could be mounted on the handle.

Alternatively, the biasing could be achieved by means of a torque motor arranged to drive the handle towards the operator's hand against the pressure exerted by the operator.

The sensor means could comprise, for example, electro-mechanical contacts or an optical means of position sensing.

The further sensor means could comprise, for example, a mechanical or optical shaft encoder or a rotary potentiometer.

In the "throttle box" application, the linear and angular positions of the handle would control the level of throttle demand. In this case, the outputs of the position sensors would be connected to a throttle control unit local to the aircraft engine or to a computer running an engine management program.

The control assembly may be provided with detents or stops in order to give the operator some indication of the relative position of the handle. The position of the detents could relate to some particular function which the apparatus was being used to control. The term "detent" is intended to refer to any means which gives a tactile indication to the operator that the control assembly, as operated by the handle 4 and shaft 5, is in a particular control mode - such as "FULL DRY" or "REHEAT" throttle modes in the non-limiting embodiment to be described.

An embodiment of the invention will now be described by way of example only with reference to the drawings of which:

Fig 1 is a side view of a control assembly in accordance with the invention.

Figs 2a-2d are perspective views of part of the assembly of Fig 1 and illustrate its operation as an aircraft throttle box;

Fig 3 is a sectional view of the throttle box of Figs 1 and 2 along a line X-X' of Fig 1;

Fig 4 is a cutaway view of the throttle box of Fig 2 and

Fig 5 is an exploded view of the throttle box of Fig 2.

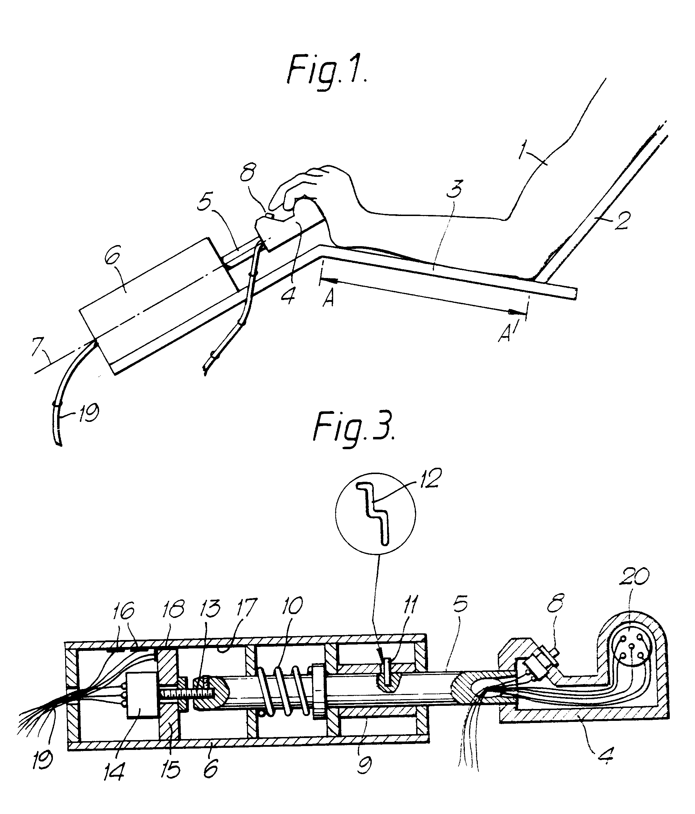

In Fig 1 an operator's arm 1 is supported by an arm rest having a fixed part 2 and an adjustable part 3. The adjustable part 3 can be moved fore and aft by a motor (not shown) in a direction shown by arrows A and A'. The adjustment is made so that the operator's arm is comfortably supported and so that his hand can rest on a handle 4 which is shaped to fit into the palm of his hand; the adjustment can also compensate for G-force. The handle 4 is an extension of a shaft 5 which is moveable within a housing 6 along longitudinal axis 7 and resiliently biased by a spring towards the operator's hand. The handle 4 and shaft 5 are also rotatable about said axis 7, within the housing 6. The handle 4 is provided with an array of controls 8 for operation by the fingers of the operator.

Operation of the assembly of Fig 1 will now be described with reference to its application as a throttle box fitted in a military aircraft. In this example, the handle is operated by the pilot's left hand.

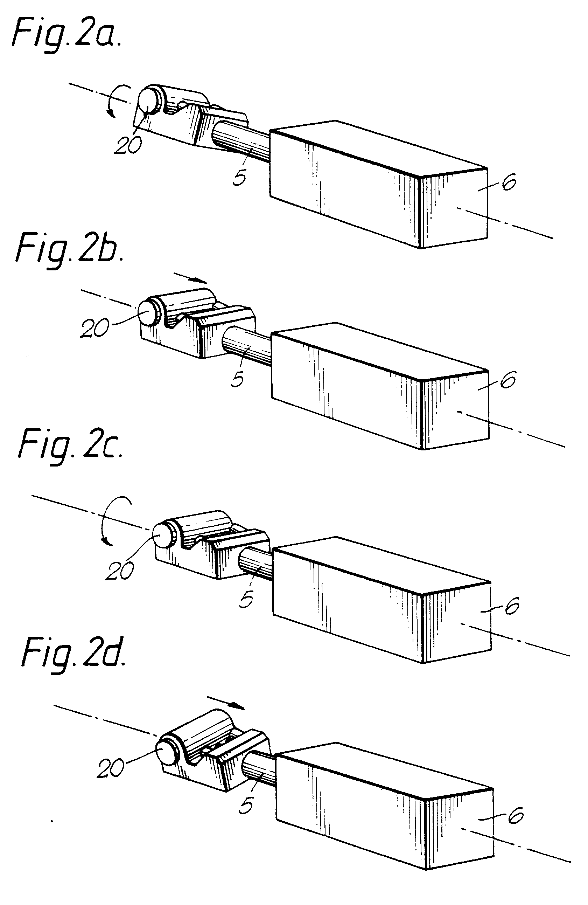

At "IDLE" the hand is twisted anti-clockwise and slightly cocked back (Fig 2a). Rolling the handle clockwise increases the throttle demand to "FULL DRY" (Fig 2b). At this point there is a detent. Pushing the hand forward and down, against a spring, allows access to the "REHEAT" range (Fig 2c). The handle can then be rotated further clockwise, until a further detent is encountered at "FULL REHEAT " (2d). At this point the hand can be pushed further forward, against the spring, to engage "COMBAT" mode.

The amount of forward travel can be quite small, and does not require any arm movement.

Releasing the forward pressure will then cause the control to spring back automatically out of "COMBAT" mode, to "FULL REHEAT". Anticlockwise rotation will reduce the demand to "MIN REHEAT". At this point releasing pressure on the control will move it back to the "DRY" range. Moving the handle forward or back is not possible except at the detent positions.

The pilot gets a visual indication of what throttle mode is currently employed by observing the orientation of the handle 4 relative to the housing 6.

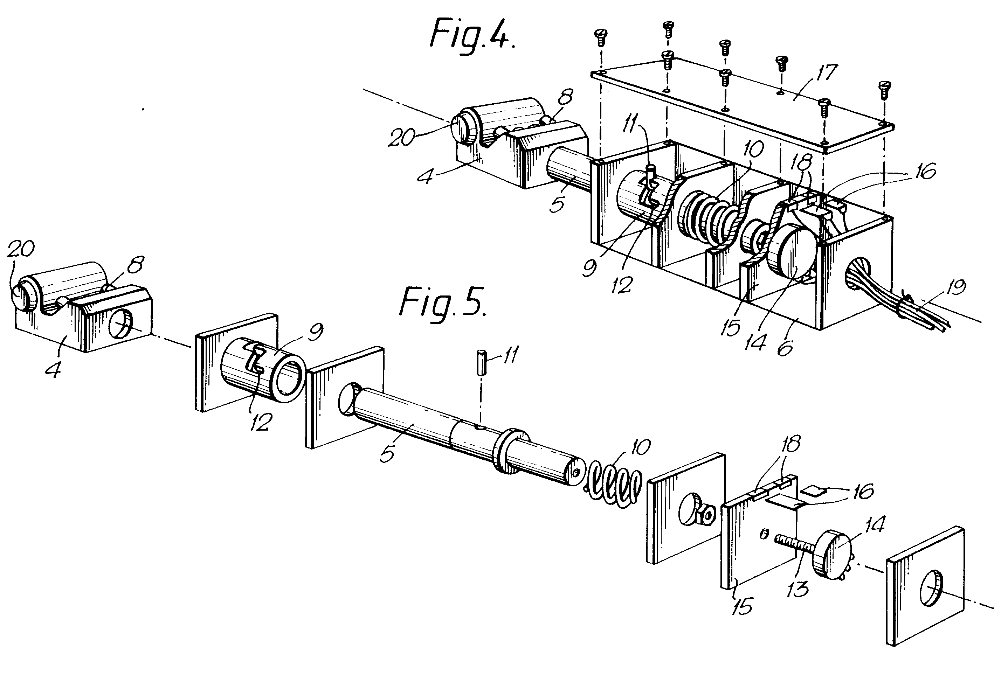

Referring now to Figs 3, 4 and 5; the handle 4 is mounted on a cylindrical shaft 8 which fits inside a fixed cylindrical sleeve 9. The axis of the shaft 8 approximates to the direction of the force exerted by the palm pressing forward and down against the restoring force of a spring 10.

The movement of the shaft 8 inside the sleeve 9 is constrained by a pin 11 which is mounted in the shaft 8 and which can slide in a complexly-shaped slot 12 in the sleeve 9. Transverse sections of the slot 12 allow a certain amount of rotational travel, while short longitudinal sections of slot 12 form the detents, as described above.

The angle of rotation of the handle 4 with respect to the housing 6 is measured by fixing the end of the shaft 8 to the shaft 13 of a rotary potentiometer 14. The body of the potentiometer 14 is fixed in a collar 15 which is free to slide longitudinally within the housing 6, but not to rotate. The two stages of longitudinal movement can be detected by simple contact strips 16 fitted to the underside of the lid 17 of the housing 6 to mate with contacts 18 fitted to the sliding collar 15.

Flying leads 19 take the electrical signals from the contacts 16, 18 and potentiometer 14 to an aircraft throttle control unit (not shown).

In place of the potentiometer 14, there could instead be a rotary motor, for example a stepper motor. Such an arrangement would allow the handle to rotate and thus give tactile feedback, compensation for G-force, an indication of the commands being given by an autopilot system or by a co-pilot having a similar control. The motor could also cause movement of the shaft 13 along the axis 7, as required.

Optionally finger-operated controls other than for engine throttle can be mounted on the handle 4. The array of controls designated 7 in the drawings can comprise push-buttons and switches which operate controls such as trim, autopilot or weapons for example. It is preferable for the push-buttons and switches, to be operable by the finger tips and for the finger movement to be forward and down. If the push-buttons and switches were operated by bending the fingers towards the palm, they might be operated inadvertently under high positive 'g' conditions.

An X-Y controller for driving a marker around a head-up or head-down display can be provided in the form of a joystick 20 mounted on the side of the handle. The joystick would be then operated by the thumb. Alternatively, the joystick could form part of the array of controls 7.

Although the invention has been described with reference to its application as an aircraft throttle box, it can also be used to control, for example, hand controlled vehicles such as wheelchairs.

## Claims

1. A hand-operated control assembly characterised in that the control assembly includes:

   a support (2,3) for an operator's forearm (1);

   a fixed housing (6) located adjacent to said support;

   a moveable member (5), supported within the housing, for rotational movement with respect to the housing and having a handle (4) extending from the housing; and

   sensor means (14) for sensing the rotational position of the handle with respect to the housing.

2. A control assembly as claimed in claim 1 in which said moveable member is manually moveable and resiliently biased towards a predetermined orientation.

3. A control assembly as claimed in claim 1 or claim 2 in which said moveable member is supported within the housing for linear movement with respect to said housing, and said control assembly further includes further sensor means (16,18) for sensing the linear position of the handle with respect to the housing.

4. A control assembly as claimed in any preceding claim in which the moveable member is resiliently biased by means of a spring (10).

5.  A control assembly as claimed in any preceding claim in which detents are provided to limit an amount of linear and rotational movement of the moveable member.

6.  A control assembly as claimed in any preceding claim in which the handle incorporates finger-operated controls (8).

7.  A control assembly as claimed in any preceding claim in which the handle incorporates a thumb-operated joystick (20).

8.  A control assembly as claimed in any preceding claim in which said sensor means is an optical position sensor.

9.  A control assembly as claimed in any preceding claim in which said further sensor means is an optical shaft encoder.

10. A hand-operated control assembly for operation by an operator having a forearm and a hand connected to said forearm, the assembly including:

    a support for supporting the operator's forearm along a longitudinal axis thereof;

    a fixed housing located adjacent to said support and having a longitudinal axis having an acute angle of incidence with the longitudinal axis of said forearm;

    a moveable member, supported within the housing, for rotational movement with respect to the housing about the longitudinal axis thereof and linear movement with respect to the housing along the longitudinal axis thereof;

    a handle fixedly attached to said moveable member and extending from the housing for being moved by said operator's hand;

    a first sensor means for sensing the linear position of the handle with respect to the housing; and

    a second sensor means for sensing the rotational position of the handle with respect to the housing.

Fig.1.

Fig.3.

# Fig.2a.

20

5

6

# Fig.2b.

20

5

6

# Fig.2c.

20

5

6

# Fig.2d.

20

5

6

Fig.4.

Fig.5.